# EUROPEAN PATENT APPLICATION

(11) **EP 4 588 895 A1**
(43) Date of publication of application: **23.07.2025**
(21) Application number: 23917309.9
(22) Date of filing: 20.12.2023
(51) Int. Cl.: C01G 45/02

(54) **TREATMENT METHOD FOR MANGANESE-COPPER MIXED SOLUTION**

(30) Priority: 17.01.2023 CN 202310077794
(71) Applicant: Contemporary Amperex Technology (Hong Kong) Limited, Central, Hong Kong (HK)
(72) Inventor: MA, Li, Ningde, Fujian 352100 (CN); GUAN, Wenhao, Ningde, Fujian 352100 (CN); WANG, Manman, Ningde, Fujian 352100 (CN); ZHONG, Wei, Ningde, Fujian 352100 (CN); GE, Xiaoming, Ningde, Fujian 352100 (CN)
(74) Representative: Ziebig Hengelhaupt Intellectual Property Attorneys Patentanwaltskanzlei PartGmbB
(86) International application number: PCT/CN2023/140386
(87) International publication number: WO 2024/152842

(57) **Abstract**

A method for treating a manganese-copper mixed solution is disclosed, including the following steps: adjusting a pH value of the manganese-copper mixed solution to 6.5 to 7 to obtain a solution defined as a first solution; adding an oxidant into the first solution to obtain a solution defined as a second solution, where the oxidant reacts with Mn²⁺ at a pH value of 6.5 to 7 to generate MnO₂; and collecting a first precipitate. This method is time-saving in separating manganese ions, and can recover high-purity manganese ions. The recovered waste liquid is treated by a simple method and causes little pollution to the environment.

## Description

This application claims priority to Chinese Patent Application No. 202310077794.0, filed on January 17, 2023 and entitled "METHOD FOR TREATING MANGANESE-COPPER MIXED SOLUTION", which is incorporated herein by reference in its entirety.

### TECHNICAL FIELD

This application relates to the field of batteries and the field of manganese ion recovery, more specifically, to a method for treating a manganese-copper mixed solution, and in particular, to a method for recovering manganese ions from waste liquid obtained by dealloying a manganese-copper alloy in a process of preparing an electrode plate or a current collector of a battery.

### BACKGROUND

A manganese-copper alloy is a precision resistance alloy that exhibits a good piezoresistive effect and a small temperature coefficient of resistance, and is applied to preparing an electrode plate and a current collector of a battery. However, in a process of preparing the electrode plate or current collector of the battery, the waste liquid obtained by dealloying the manganese-copper alloy contains a large amount of manganese ions and a small amount of copper ions. In order to be cost-effective, it is necessary to separate and recover the manganese ions in the waste liquid obtained by dealloying the manganese-copper alloy. Neither the manganese ions nor copper ions in the waste liquid obtained by dealloying the manganese-copper alloy meet the discharge standard specified in the *Integrated Wastewater Discharge Standard,* and are not suitable for being discharged directly. The existing method for recovering manganese ions from a manganese-copper mixed solution typically adopts extraction technology. However, the extraction technology used for separating manganese ions and copper ions involves complicated operation steps, takes a long time, and results in a low purity of the obtained manganese ions. In addition, an organic solution needs to be used in the extraction process, thereby making the waste liquid treatment process complicated and hardly compliant with the discharge standard.

### SUMMARY

In view of the above problem, this application provides a method for treating a manganese-copper mixed solution. The method is time-saving in separating manganese ions, and can recover high-purity manganese ions. The recovered waste liquid is treated by a simple method and meets the discharge standard.

This application provides a method for treating a manganese-copper mixed solution. The method includes the following steps:
Step (S1): adjusting a pH value of the manganese-copper mixed solution to 6.5 to 7 to obtain a solution defined as a first solution;
Step (S2): adding an oxidant into the first solution to obtain a solution defined as a second solution, where the oxidant reacts with Mn²⁺ at a pH value of 6.5 to 7 to generate MnO₂; and
Step (S3): collecting a first precipitate.

In the technical solution of this embodiment of this application, the pH value of the waste liquid is adjusted to 6.5 to 7, and an oxidant is added to react with Mn²⁺ at this pH value to generate a MnO₂ precipitate. Mn²⁺ is separated after completion of precipitation. After the oxidant is added according to the method provided in this application, Mn²⁺ is quickly precipitated, and then Mn²⁺ is separated. The operation steps are simple and take just a short time. Because Cu²⁺ does not react with the oxidant in an environment with a pH value of 6.5 to 7, the separated Mn²⁺ is of high purity.

In some embodiments, step (S2) further includes: adding the oxidant based on an amount of substance of Mn²⁺, where a ratio of an amount of substance of the oxidant to the amount of substance of Mn²⁺ is 3: 1 to 30: 1.

If the amount of oxidant added is excessively small, the Mn²⁺ in the manganese-copper mixed waste liquid will be separated to a deficient extent, and the recovery rate will be low. If the amount of oxidant added is excessively large, a waste of cost will occur. By controlling the ratio of the amount of substance of the added oxidant to the amount of substance of Mn²⁺ to fall within the range of 3:1 to 30: 1, the largest possible amount of Mn²⁺ ions in the manganese-copper mixed liquid is made to react with the oxidant to form a precipitate, thereby separating Mn²⁺ to the greatest extent without causing cost waste.

In some embodiments, the oxidant includes at least one of H₂O₂, ammonium dithionate (NH₄)₂S₂O₃, hypochlorous acid, hypochlorite salt, chloric acid, chlorate salt, or chlorine water.

The H₂O₂, (NH₄)₂S₂O₃, hypochlorous acid, hypochlorite salt, chloric acid, chlorate salt, and chlorine water in this application are all inorganic compounds, thereby making the subsequent waste liquid treatment process simpler, more cost-efficient, more effective, and more environment-friendly.

In some embodiments, the oxidant is H₂O₂, and a ratio of an amount of substance of H₂O₂ to an amount of substance of Mn²⁺ is 11: 1 to 17: 1.

By controlling the amount of the added H₂O₂ to the extent that the ratio of the amount of substance of H₂O₂ to the amount of substance of Mn²⁺ is 11: 1 to 17: 1, the recovery efficiency of H₂O₂ for Mn²⁺ in the manganese-copper mixed solution is high.

In some embodiments, in step (S2), the oxidant is added dropwise into the first solution.

After being added into the manganese-copper mixture, the H₂O₂ reacts with Mn²⁺ to generate MnO₂ first. The generated MnO₂ acts as a catalyst to catalyze the decomposition of H₂O₂. If the H₂O₂ is added dropwise at an excessively high speed, the H₂O₂ will decompose in large quantities, thereby impairing the oxidation effect. With the oxidant added dropwise into the first solution, the decomposition of H₂O₂ can be alleviated, and the oxidation effect can be improved.

In some embodiments, the manganese-copper mixed solution is a waste liquid obtained by dealloying a copper-manganese alloy in a process of preparing an electrode plate or current collector of a battery.

The manganese ion content in the waste liquid obtained by dealloying the manganese-copper alloy during the preparation of the electrode plate or current collector of the battery is more than 1000 times that of the copper ion content. The manganese ions in the waste liquid obtained by dealloying the manganese-copper alloy are separated and recovered by the method of the present invention, thereby reducing the production cost of the battery and alleviating the pollution of manganese ion emissions to the environment.

In some embodiments, after step (S3), the method further includes:
Step (S4): collecting a third solution, where the third solution is a solution left after completion of collecting the first precipitate; adding a precipitant into the third solution, where the precipitant reacts with Mn²⁺ and Cu²⁺ to generate a second precipitate; separating the second precipitate from a fourth solution, where the fourth solution is a solution left after removing the second precipitate; adding a pH regulator into the fourth solution; and adjusting a pH value of the fourth solution to 7 to 9.

This step can remove Cu²⁺ and residual Mn²⁺ in the third solution after most of the Mn²⁺ ions are separated after step (S3), and neutralize OH⁻, so that the waste liquid meets the requirements of the *Integrated Wastewater Discharge Standard* with respect to the contents of manganese ions, copper ions, and OH⁻.

In some embodiments, an amount of the precipitant added is A×B×C, where A is 5% to 15%, B is an amount of substance of Mn²⁺ in the third solution, and C is a molar mass of the precipitant.

By controlling the amount of the precipitant added, all the remaining metal ions in the mixed solution can be precipitated.

In some embodiments, the precipitant is a carbonate salt or an alkaline substance.

The carbonate or alkaline substance added can implement rapid precipitation of Cu²⁺ and residual Mn²⁺ in the third solution, and incur few side reactions.

In some embodiments, the precipitant includes at least one of Na₂CO₃, K₂CO₃, NaHCO₃, or NaOH.

The added Na₂CO₃, K₂CO₃, NaHCO₃, and NaOH can implement rapid precipitation of Cu²⁺ and residual Mn²⁺ in the third solution, and incur few side reactions. In addition, the Na₂CO₃, K₂CO₃, NaHCO₃, and NaOH are inexpensive, thereby reducing cost.

In some embodiments, the pH regulator includes at least one of acetic acid, citric acid, or carbonic acid.

The acetic acid, citric acid, and carbonic acid are weak acids, and can adjust the pH value more accurately.

The above description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral represents the same component. In the drawings:
FIG. 1 is a flowchart of a method for treating a manganese-copper mixed solution according to some embodiments of this application; and
FIG. 2 is a flowchart of a method for treating a manganese-copper mixed solution according to some embodiments of this application, where the method includes treatment of a third solution.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

A manganese-copper alloy is a precision resistance alloy that exhibits a good piezoresistive effect and a small temperature coefficient of resistance, and is increasingly applied to the process of preparing an electrode plate and a current collector of a battery.

The inventor has noticed that in a process of preparing an electrode plate or current collector of a battery, a waste liquid obtained by dealloying a manganese-copper alloy contains a large amount of manganese ions and a small amount of copper ions. Both types of ions fail to meet the discharge standard specified in the *Integrated Wastewater Discharge Standard* and are not suitable for being directly discharged. In addition, the manganese ion content in the waste liquid is more than 1000 times that of the copper ion content. The price of manganese is relatively high. In order to reduce save cost, it is necessary to separate and recover the manganese ions in the waste liquid obtained by dealloying the manganese-copper alloy. The existing method for separating manganese ions typically adopts extraction technology. However, the extraction technology used for separating manganese ions and copper ions takes a long time, incurs a low recovery rate, and results in a low purity of the obtained manganese ions. In addition, an organic solution needs to be used in the extraction process, thereby making the waste liquid treatment process complicated and hardly compliant with the discharge standard.

To solve the above technical problems, the present invention provide a method for treating a manganese-copper mixed solution. In this method, the pH value of the waste liquid is adjusted to 6.5 to 7, and an oxidant is added to react with Mn²⁺ at this pH value to generate a MnO₂ precipitate, so that Mn²⁺ is separated after completion of precipitation. After the oxidant is added according to the method provided in this application, Mn²⁺ is quickly precipitated, and then Mn²⁺ is separated. The operation steps are simple and take just a short time. Because Cu²⁺ does not react with the oxidant in an environment with a pH value of 6.5 to 7, the separated Mn²⁺ is of high purity. Moreover, in this method, no organic solvent is added, and the subsequent waste liquid treatment is simple and brings little pollution to the environment.

The following describes this application in detail with reference to drawings and embodiments.

The method for treating a manganese-copper mixed solution according to an embodiment of this application is applicable to any manganese-copper mixed solution, and is not limited to use in separating and recovering manganese ions from the waste liquid obtained by dealloying a manganese-copper alloy in a battery preparation process.

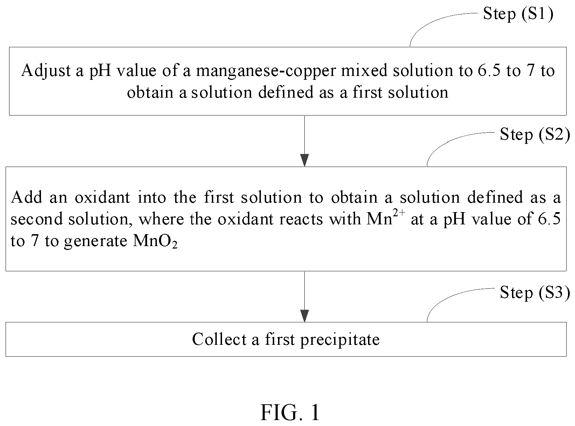

Referring to FIG. 1, according to some embodiments of this application, this application provides a method for treating a manganese-copper mixed solution. The method includes the following steps:
Step (S1): adjusting a pH value of the manganese-copper mixed solution to 6.5 to 7 to obtain a solution defined as a first solution;
Step (S2): adding an oxidant into the first solution to obtain a solution defined as a second solution, where the oxidant reacts with Mn²⁺ at a pH value of 6.5 to 7 to generate MnO₂; and
Step (S3): collecting a first precipitate.

In this application, in step (S1), the amount of manganese-copper mixed solution may be selected according to experimental situation and experimental conditions. The method for recovering manganese from the manganese-copper mixed solution according to this application works regardless of the amount of the manganese-copper mixed solution. As an example, the amount of the manganese-copper mixed solution may be 1 mL, 5 mL, 10 mL, 200 mL, 30 L, 50 L, 100 L, 300 L, 1 t, 5 t, 30 t, or the like, or a range formed by any two thereof, for example, 1 mL to 10 mL, 200 mL to 30 L, 50 L to 300 L, 1 t to 30 t, or the like.

In step (S1), the content ratio of Mn²⁺ to Cu²⁺ in the manganese-copper mixture is not limited. As an example, in the manganese-copper mixture, the content of Mn²⁺ may be greater than the content of Cu²⁺, the content of Mn²⁺ may be equal to the content of Cu²⁺, or, the content of Mn²⁺ may be less than the content of Cu²⁺. In a practical process of preparing an electrode plate or current collector of a battery, the manganese ion content in the waste liquid obtained by dealloying the manganese-copper alloy by means of HCL is more than 1000 times that of the copper ion content.

As an example, the pH value of the manganese-copper mixture is adjusted to 6.5 to 7. The pH value of the manganese-copper mixture may be adjusted to: 6.5, 6.6, 6.7, 6.8, 6.9, 7, or 6.52, 6.55, 6.75, 6.77, 6.78, 6.79, or the like, or a range formed by any two thereof, for example, 6.5 to 6.7, 6.8 to 7, 6.52 to 6.75, 6.77 to 6.79, or the like. The pH value may be set to an appropriate value according to actual needs as long as the pH value of the manganese-copper mixture falls within the range of 6.5 to 7.

The slightly acidic conditions with a pH value of 6.5 to 7 can reduce consumption of the oxidant such as H₂O₂ caused by the decomposition of the oxidant such as H₂O₂ as catalyzed by the MnO₂ precipitate generated in the subsequent step (S2).

In the method for treating a manganese-copper mixed solution according to this application, the pH value of the waste liquid is adjusted to 6.5 to 7, and an oxidant is added to react with Mn²⁺ at this pH value to generate a MnO₂ precipitate, so that Mn²⁺ is separated after completion of precipitation. In this method, after the oxidant is added, Mn²⁺ is quickly precipitated, and then Mn²⁺ is separated by separating the precipitate. The operation steps are simple and take just a short time. Because Cu²⁺ does not react with the oxidant at all in an environment with a pH value of 6.5 to 7, the separated Mn²⁺ is of high purity. By adjusting the pH value of the waste liquid, the method of this application makes the redox reaction between the oxidant and Mn²⁺ relatively thorough, thereby making the recovery rate of manganese ions relatively high.

In some embodiments, in step (S1), the pH value of the manganese-copper mixed solution is adjusted to 6.5 to 7 by using an alkaline solution. As an example, the alkaline solution includes, but is not limited to, a NaOH solution, a KOH solution, or the like.

In step (S2), the oxidant reacts with Mn²⁺ to generate MnO₂ at a pH range of 6.5 to 7, without reacting with Cu²⁺.

In some embodiments, step (S2) further includes: adding the oxidant based on an amount of substance of Mn²⁺, where a ratio of an amount of substance of the oxidant to the amount of substance of Mn²⁺ is 3: 1 to 30: 1.

As an example, the amount of the oxidant added is: the ratio of the amount of substance of the oxidant to the amount of substance of Mn²⁺ may be 3: 1, 4: 1, 7: 1, 10: 1, 14: 1, 19: 1, 25: 1, 30: 1, or 3.2: 1, 5.3: 1, 7.4: 1, 10.5: 1, 14.6: 1, 19.7: 1, 25.8: 1, 29.9: 1, or the like, or a range formed by any two thereof, for example, 3: 1 to 7: 1, 10: 1 to 14: 1, 19: 1 to 30: 1, 3.2: 1 to 7.4: 1, 10.5: 1 to 19.7: 1, 25.8: 1 to 29.9: 1, or the like. This ratio may be set to an appropriate value according to actual needs as long as the ratio of the amount of substance of the oxidant to the amount of substance of Mn²⁺ is 3: 1 to 30: 1.

If the amount of oxidant added is excessively small, the Mn²⁺ in the manganese-copper mixed waste liquid will be separated to a deficient extent, and the recovery rate will be low. If the amount of oxidant added is excessively large, a waste of cost will occur. By controlling the ratio of the amount of substance of the added oxidant to the amount of substance of Mn²⁺ to fall within the range of 3:1 to 30: 1, the largest possible amount of Mn²⁺ ions in the manganese-copper mixed liquid is made to react with the oxidant to form a precipitate, thereby separating Mn²⁺ to the greatest extent without causing cost waste.

In some embodiments, the oxidant includes at least one of H₂O₂, ammonium dithionate (NH₄)₂S₂O₃, hypochlorous acid, hypochlorite salt, chloric acid, chlorate salt, or chlorine water.

The H₂O₂, (NH₄)₂S₂O₃, hypochlorous acid, hypochlorite salt, chloric acid, chlorate salt, and chlorine water in this application are all inorganic compounds, thereby making the subsequent waste liquid treatment process simpler, more cost-efficient, more effective, and more environment-friendly.

Understandably, the oxidant of this application is not limited to H₂O₂, ammonium dithionite (NH₄)₂S₂O₄, hypochlorous acid, hypochlorite salt, chloric acid, chlorate salt, chlorine water, or another inorganic oxidant, as long as the inorganic oxide reacts with Mn²⁺ to generate MnO₂ at a pH value of 6.5 to 7 without reacting with Cu²⁺.

In some preferred embodiments, the oxidant is H₂O₂, and a ratio of an amount of substance of H₂O₂ to an amount of substance of Mn²⁺ is 11: 1 to 17: 1.

Under alkaline conditions, the generated MnO₂ catalyzes the decomposition of H₂O₂ (generates O₂), thereby increasing the amount of H₂O₂ consumed. Therefore, in step (S1), a slightly acidic condition, that is, a pH value of 6.5 to 7, is selected to suppress the decomposition of H₂O₂.

By controlling the amount of the added H₂O₂ to the extent that the ratio of the amount of substance of H₂O₂ to the amount of substance of Mn²⁺ is 11: 1 to 17: 1, the recovery efficiency of H₂O₂ for Mn²⁺ in the manganese-copper mixed solution is up to 92% or higher.

In some embodiments, in step (S2), the oxidant is added dropwise into the first solution.

After being added into the manganese-copper mixture, the H₂O₂ reacts with Mn²⁺ to generate MnO₂ first. The generated MnO₂ acts as a catalyst to catalyze the decomposition of H₂O₂. If the H₂O₂ is added dropwise at an excessively high speed, the H₂O₂ will decompose in large quantities, thereby impairing the oxidation effect. With the oxidant added dropwise into the first solution, the decomposition of H₂O₂ can be alleviated, and the oxidation effect can be improved.

In some embodiments, the manganese-copper mixed solution is a waste liquid obtained by dealloying a copper-manganese alloy in a process of preparing an electrode plate or current collector of a battery.

The manganese ion content in the waste liquid obtained by dealloying the manganese-copper alloy during the preparation of the electrode plate or current collector of the battery is more than 1000 times that of the copper ion content. The manganese ions in the waste liquid obtained by dealloying the manganese-copper alloy are separated and recovered by the method of the present invention, thereby reducing the production cost of the battery and alleviating the pollution of manganese ion emissions to the environment.

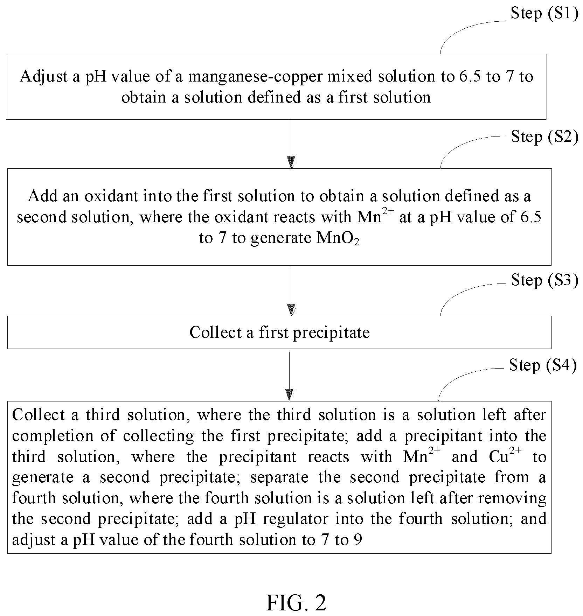

Referring to FIG. 2, in some embodiments, after step (S3), the method further includes:
Step (S4): collecting a third solution, where the third solution is a solution left after completion of collecting the first precipitate; adding a precipitant into the third solution, where the precipitant reacts with Mn²⁺ and Cu²⁺ to generate a second precipitate; separating the second precipitate from a fourth solution, where the fourth solution is a solution left after removing the second precipitate; adding a pH regulator into the fourth solution; and adjusting a pH value of the fourth solution to 7 to 9.

This step can remove Cu²⁺ and residual Mn²⁺ in the third solution after most of the Mn²⁺ ions are separated after step (S4), and neutralize OH⁻, so that the waste liquid meets the requirements of the *Integrated Wastewater Discharge Standard* with respect to the contents of manganese ions, copper ions, and OH⁻.

In some embodiments, an amount of the precipitant added is A×B×C, where A is 5% to 15%, B is an amount of substance of Mn²⁺ in the third solution, and C is a molar mass of the precipitant.

As an example, the value of A may be 5%, 6%, 7%, 9%, 11%, 12%, 13%, 14%, 15%, or 5.5%, 6.5%, 7.5%, 9.5%, 11.5%, 12.5%, 13.5%, 14.5%, or the like, or a range formed by any two thereof, for example, 5% to 9%, 11% to 13%, 14% to 15%, 5.5% to 7.5%, 9.5% to 11.5%, 12.5% to 14.5%, or the like. the value of A may be set to an appropriate value according to actual needs as long as the value of A falls within the range of 5% to 15%.

The amount of the precipitant to be added may be calculated by measuring the amount of manganese ions and copper ions in the third solution. In contrast to the waste liquid obtained by dealloying the manganese-copper alloy, the amount of manganese ions in the third solution is still much greater than the amount of copper ions. Therefore, the amount of the precipitant to be added is calculated by using the amount of substance of manganese ions, and the calculated value is sufficient to precipitate the copper ions and manganese ions in the third solution.

In some embodiments, the precipitant is a carbonate salt or an alkaline substance.

The carbonate or alkaline substance added can implement rapid precipitation of Cu²⁺ and residual Mn²⁺ in the third solution, and incur few side reactions.

In addition, adding a carbonate salt to precipitate Cu²⁺ and residual Mn²⁺ in the third solution can reduce the introduction of OH⁻ to some extent, facilitate subsequent adjustment of the pH value of the waste liquid to 7 to 9, save the consumption of weak acid, reduce cost, and shorten operation time.

In some embodiments, the precipitant includes at least one of Na₂CO₃, K₂CO₃, NaHCO₃, or NaOH.

The added Na₂CO₃, K₂CO₃, NaHCO₃, and NaOH can implement rapid precipitation of Cu²⁺ and residual Mn²⁺ in the third solution, and incur few side reactions. In addition, the Na₂CO₃, K₂CO₃, NaHCO₃, and NaOH are inexpensive, thereby reducing cost.

In some embodiments, the pH regulator includes at least one of acetic acid, citric acid, or carbonic acid.

The acetic acid, citric acid, and carbonic acid are weak acids, and can adjust the pH value more accurately.

In some embodiments, in step (S3) and step (S4), the first precipitate and the second precipitate may be collected by, but not limited to, filtration, centrifugation, or the like.

The following provides specific embodiments and comparative embodiments to describe the preparation process and test data of this application.

### Embodiment 1

Step (S1): Taking 30 mL of waste liquid obtained by dealloying a manganese-copper alloy, and measuring the contents of Mn²⁺ and Cu²⁺ in the waste liquid, where the mass percent of Cu²⁺ in the total mass of the waste liquid is 0.04%, and the mass percent of Mn²⁺ in the total mass of the waste liquid is 7.94%; adding 2 mol/L NaOH solution to adjust the pH value of the waste liquid obtained by dealloying the manganese-copper alloy to 6.5 to 7, so as to obtain a first solution.

Step (S2): Adding 15 mL of 30% H₂O₂ dropwise into the first solution obtained in step (S1), so as to obtain a second solution.

Step (S3): Leaving the second solution in step (S2) to stand for one hour, and then filtering out a first precipitate, where the solution obtained after filtering out the first precipitate is a third solution.

Step (S4): Waste liquid treatment 1: adding Na₂CO₃ into the third solution obtained in step (S3), where the amount of Na₂CO₃ added is: 10% × amount of substance of Mn²⁺ in the third solution × 106 g, and then filtering out a second precipitate to obtain a fourth solution; waste liquid treatment 2: adding acetic acid dropwise into the fourth solution, and measuring the pH value of the waste liquid by using pH test paper until the pH value falls within the range of 7 to 9.

### Embodiments 2 to 5

Embodiments 2 to 5 are substantially identical to Embodiment 1 except that the volume of H₂O₂ added in step (S2) in Embodiments 2 to 5 is different from that in Embodiment 1. Other steps in Embodiments 2 to 5 are identical to those in Embodiment 1, as detailed in Table 1.

### Embodiment 6

Embodiment 6 is substantially identical to Embodiment 1 except that 60 mL of 250 mg/L hypochlorous acid is added in step (S2) in Embodiment 6. Other steps in Embodiment 6 are identical to those in Embodiment 1, as detailed in Table 1.

### Comparative Embodiment 1

Step (B1): Taking 30 mL of waste liquid obtained by dealloying a manganese-copper alloy, and measuring the contents of Mn²⁺ and Cu²⁺ in the waste liquid, where the mass percent of Cu²⁺ in the total mass of the waste liquid is 0.04%, and the mass percent of Mn²⁺ in the total mass of the waste liquid is 7.94%.

Step (B2): Adding 2 mol/L NaOH dropwise until no more precipitate is produced, and filtering the precipitate.

Step (B3): Waste liquid treatment 1: Adding Na₂CO₃ into the solution obtained after filtering out the precipitate in step (S1), and then filtering the product; waste liquid treatment 2: adding acetic acid dropwise into the filtered waste liquid, and measuring the pH value of the waste liquid by using pH test paper until the pH value falls within the range of 7 to 9.

**Table 1 Experimental conditions and test data of embodiments and comparative embodiments (To be continued)**

| Serial number | Hydrogen peroxide content or hypochlorous acid volume (mL) | Ratio of amount of substance of H₂O₂/hypochlorous acid: Mn²⁺ | In the waste liquid after step (S3) in Embodiments 1 to 5 and after step (B2) in Comparative Embodiment 1 | |
|---|---|---|---|---|
| | | | Mass concentration of Cu²⁺ (mg/L) | Mass concentration of Mn²⁺ (mg/L) |
| Embodiment 1 | 15 | 3: 1 | 10.5 | 14,229.98 |
| Embodiment 2 | 30 | 6: 1 | 10.4 | 11,314.38 |
| Embodiment 3 | 60 | 12: 1 | 10.3 | 7,722.65 |
| Embodiment 4 | 90 | 18: 1 | 106 | 7,08639 |
| Embodiment 5 | 150 | 29: 1 | 10.5 | 7,388.67 |
| Embodiment 6 | 60 | 8: 1 | 10.4 | 10,571.77 |
| Comparative Embodiment 1 | / | | / | / |

**Table 1 Experimental conditions and test data of embodiments and comparative embodiments (Continued)**

| Serial number | Manganese ion recovery rate | In the waste liquid after step (S4) in Embodiments 1 to 5 and after step (B3) in Comparative Embodiment 1 | | Recovery efficiency (final) |
|---|---|---|---|---|
| | | Mass concentration of Cu²⁺ (mg/L) | Mass concentration of Mn²⁺ (mg/L) | |
| Embodiment 1 | 85% | 1.03 | 7.47 | 99.99% |
| Embodiment 2 | 88% | 1.06 | 5.53 | 99.99% |
| Embodiment 3 | 92% | 0.93 | 5.64 | 99.99% |
| Embodiment 4 | 93% | 0.99 | 3.72 | 100.00% |
| Embodiment 5 | 92% | 0.98 | 4.71 | 100.00% |
| Embodiment 6 | 89% | 1.00 | 5.99 | 99.99% |
| Comparative Embodiment 1 | / | 0.82 | 1.02 | 100.00% |

As can be seen from the results of Embodiments 1 to 5 in Table 1, the recovery rate of Mn²⁺ increases with the increase of the amount of H₂O₂ added. When the amount of H₂O₂ added reaches 60 mL, the recovery rate of Mn²⁺ remains basically unchanged even if the amount of H₂O₂ added continues to increase, thereby reaching a balance of this reaction. As can be concluded from the test results in Table 1, Embodiment 3 is a preferred embodiment. After step (S3), the recovery rate of manganese ions reaches 92%, that is, 92% of manganese ions are recovered and highly pure. After step (S4), the recovery rate of manganese ions and copper ions reaches 99.99%, that is, the residual manganese ions and copper ions are efficiently recovered.

In Comparative Embodiment 1 versus Embodiment 3, the Cu ions and Mn ions in the waste liquid after step (B3) in Comparative Embodiment 1 are almost completely precipitated, with a recovery rate of approximately 100%. However, the Mn precipitate is unable to be distinguished from the Cu precipitate, and the effect of separating Mn and Cu is not achieved.

The results of Embodiment 6 show that when the oxidant is hypochlorous acid, the recovery rate of the manganese ions in the waste liquid obtained by dealloying a manganese-copper alloy reaches 89%, indicating that the recovery rate of manganese ions is also relatively high when the oxidant is hypochlorous acid.

As can be seen from the comparison between the embodiment and the comparative embodiment, in the method for treating a manganese-copper mixed solution according to the present invention, the pH value of the waste liquid is adjusted to the corresponding value, and an oxidant that reacts with Mn²⁺ but does not react with Cu²⁺ at this pH value is added so that a precipitate is produced and Mn²⁺ is separated. After the oxidant is added according to the method provided in this application, Mn²⁺ is quickly precipitated, and then Mn²⁺ is separated. The operation steps are simple and take just a short time. Because Cu²⁺ does not react with the oxidant at all, the separated Mn²⁺ is of high purity. The recovery rate of manganese is up to 92% or even higher, thereby achieving a relatively high recovery rate.

Moreover, in the method of the present invention, no organic solvent is added, and the waste liquid treatment is simple and brings little pollution to the environment. Furthermore, after the waste liquid in the present invention is treated, the Cu²⁺, Mn²⁺, and OH⁻ in the waste liquid substantially meet the requirements of the *Integrated Wastewater Discharge Standard.*

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A method for treating a manganese-copper mixed solution, **characterized in that** the method comprises the following steps:
adjusting a pH value of the manganese-copper mixed solution to 6.5 to 7 to obtain a solution defined as a first solution;
adding an oxidant into the first solution to obtain a solution defined as a second solution, wherein the oxidant reacts with Mn²⁺ at a pH value of 6.5 to 7 to generate MnO₂; and
collecting a first precipitate.

2. The method for treating a manganese-copper mixed solution according to claim 1, **characterized in that** the step of adding an oxidant into the first solution to obtain a solution defined as a second solution, wherein the oxidant reacts with Mn²⁺ at a pH value of 6.5 to 7 to generate MnO₂, further comprises:
adding the oxidant based on an amount of substance of Mn²⁺, wherein a ratio of an amount of substance of the oxidant to the amount of substance of Mn²⁺ is 3: 1 to 30: 1.

3. The method for treating a manganese-copper mixed solution according to claim 1 or 2, **characterized in that** the oxidant comprises at least one of H₂O₂, ammonium dithionate (NH₄)₂S₂O₃, hypochlorous acid, hypochlorite salt, chloric acid, chlorate salt, or chlorine water.

4. The method for treating a manganese-copper mixed solution according to claim 1 or 2, **characterized in that** the oxidant is H₂O₂, and a ratio of an amount of substance of H₂O₂ to an amount of substance of Mn²⁺ is 11: 1 to 17: 1.

5. The method for treating a manganese-copper mixed solution according to claim 1, **characterized in that**, in the step of adding an oxidant into the first solution to obtain a solution defined as a second solution, wherein the oxidant reacts with Mn²⁺ at a pH value of 6.5 to 7 to generate MnO₂, the oxidant is added dropwise into the first solution.

6. The method for treating a manganese-copper mixed solution according to claim 1, wherein the manganese-copper mixed solution is a waste liquid obtained by dealloying a copper-manganese alloy in a process of preparing an electrode plate or current collector of a battery.

7. The method for treating a manganese-copper mixed solution according to claim 1, **characterized in that** after the step of collecting a first precipitate, the method further comprises:
collecting a third solution, wherein the third solution is a solution left after completion of collecting the first precipitate; adding a precipitant into the third solution, wherein the precipitant reacts with Mn²⁺ and Cu²⁺ to generate a second precipitate; separating the second precipitate from a fourth solution, wherein the fourth solution is a solution left after removing the second precipitate; adding a pH regulator into the fourth solution; and adjusting a pH value of the fourth solution to 7 to 9.

8. The method for treating a manganese-copper mixed solution according to claim 7, **characterized in that** an amount of the precipitant added is A×B×C, wherein A is 5% to 15%, B is an amount of substance of Mn²⁺ in the third solution, and C is a molar mass of the precipitant.

9. The method for treating a manganese-copper mixed solution according to claim 7 or 8, **characterized in that** the precipitant is a carbonate salt or an alkaline substance.

10. The method for treating a manganese-copper mixed solution according to claim 9, **characterized in that** the precipitant comprises at least one of Na₂CO₃, K₂CO₃, NaHCO₃, or NaOH.

11. The method for treating a manganese-copper mixed solution according to claim 7, **characterized in that** the pH regulator comprises at least one of acetic acid, citric acid, or carbonic acid.
